(19) Europäisches Patentamt
European Patent Office
Office européen des brevets

(11) **EP 4 064 156 B1**

(12) **EUROPEAN PATENT SPECIFICATION**

(45) Date of publication and mention
of the grant of the patent:
**16.07.2025 Bulletin 2025/29**

(21) Application number: **21305350.7**

(22) Date of filing: **22.03.2021**

(51) International Patent Classification (IPC):
**G06Q 10/06** (2023.01)

(52) Cooperative Patent Classification (CPC):
**G06Q 10/06313**

(54) **PREDICTIVE ALLOCATION OF NODES IN A QUEUE**

PRÄDIKTIVE ZUTEILUNG VON KNOTEN IN EINER WARTESCHLANGE

ATTRIBUTION PRÉDICTIVE DE N UDS DANS UNE FILE D'ATTENTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**28.09.2022 Bulletin 2022/39**

(73) Proprietor: **Amadeus S.A.S.
06410 Biot (FR)**

(72) Inventors:
• **SALCH, Alexandre
06410 BIOT (FR)**
• **BOUDIA, Mourad
06410 BIOT (FR)**
• **MOHAMED, Suraj
06410 BIOT (SG)**

(74) Representative: **Samson & Partner Patentanwälte
mbB
Widenmayerstraße 6
80538 München (DE)**

(56) References cited:
**US-A1- 2006 041 458      US-A1- 2018 260 253
US-A1- 2020 411 168**

**Description**

**TECHNICAL FIELD**

The present invention generally relates to computers and computer software, and more specifically, to methods, systems, and computer program products for implementing an optimization process and simulation process to predictively allocate nodes in a queue.

**BACKGROUND**

Regarding airport check-in services, although self-service check-in facilities are more predominant, traditional check-in desks will remain present for a number of reasons such as security, logistical baggage aspects, and traveler preference for personal treatment and ease of use. At many airports, however, check-in capacity is a scarce resource and during specific hours, the number of check-in counters can appear to be rather restrictive for the total demand. Consequently, long waiting times at check-in desks may be encountered. This demand, and in situations of dedicated check-in as generally preferred by (non-domestic) airlines, may lead to undesirable long queues and excessive waiting times at check-in desks. For airlines, this may result in daily conflicts and contention with other airlines for available check-in resources. For airports, considerations might arise for the necessity of check-in capacity expansions in the near future.

An efficient planning of check-in capacities is therefore required to determine an optimized allocation of resources based on a number of desks. For example, there is a need for an optimization model to determine the number of desks to assign to each ground handler in order to minimize operating costs while respecting the quality of service and social distancing constraints while considering a number of constraints, including adjacent desks that could be handled by one ground handler.

Additionally, an optimization method for desk (e.g., node) allocation can be utilized in other technology areas and services. For example, there is a need in cloud computing services with respect to data queuing and determining a number of cores in a processor to devote to a specific type of application for efficiency based on adjacency constraints. In a storage area network (SAN), zoning is the allocation of resources for device load balancing and for selectively allowing access to data only to certain users. An optimization method for node allocation to determine where to dedicate particular processor cores (e.g., adjacency issues) based on the assigned jobs of each task. US2020/411168A1 is part of the prior-art.

Thus, improved methods, systems, and computer program products for implementing an optimization process and simulation process to predictively allocate nodes in a queue are needed.

**SUMMARY**

In embodiments of the invention, a method for providing a resource allocation schedule is provided. The method includes receiving, from a resource allocation demand server via a data communications interface, a resource allocation request which includes task information based on a task schedule, a time period including a plurality of time intervals, a number of resources available during each time interval, a number of nodes available during each time interval, and adjacency constraints for each adjacent node of the number of nodes. The method further includes, in response to the resource allocation request and for each time interval of the time period, determining a first number of tasks to be processed in a task queue within the time interval based on the task information, determining a second number of tasks from the task queue that are unprocessed after a time interval that immediately precedes the time interval, determining, based on the adjacency constraints for each adjacent node for the number of nodes, a resource allocation constraint for each resource, and determining a subset of the number of nodes to be assigned to each resource in the time interval based on: (i) the first number of tasks, (ii) the second number of tasks, and (iii) the resource allocation constraint for each resource. The method further includes providing, to the resource allocation demand server via the data communications interface, a resource allocation schedule which includes the subset of the number of nodes assigned to each resource for each time interval of the time period.

These and other embodiments can each optionally include one or more of the following features.

In some embodiments of the invention, the method further includes computing, via a simulation model, a quality of service measure for each time interval based on the number of nodes to be assigned to each resource for each time interval.

In some embodiments of the invention, the quality of service measure includes at least one of a waiting time for the first task and the second task to be processed and a queue size for each node.

In some embodiments of the invention, the resource allocation request further includes a maximum number of available nodes, and determining the number of nodes to be assigned to each resource for each time interval is further based on the maximum number of available nodes.

In some embodiments of the invention, the resource allocation request further includes a social distance constraint, and determining the number of nodes to be assigned to each resource for each time interval is further based on the social distance constraint.

In some embodiments of the invention, the resource allocation request further includes a quality of service constraint, and determining the number of nodes to be assigned to each resource for each time interval is further based on the quality of service constraint.

In some embodiments of the invention, the resource allocation constraint includes a change in the number of nodes available to the resource from the time interval and the time interval that immediately precedes the time interval, and determining the number of nodes to be assigned to each resource for each time interval is further based on the number of nodes available to the resource for each time interval.

In some embodiments of the invention, determining the number of nodes to be assigned to each resource for each time interval is further based on a determining a flow rate of tasks being processed based on an arrival time, and the resource allocation schedule is based on the flow rate of the tasks being processed for each time interval.

In some embodiments of the invention, a computing apparatus including one or more processors, at least one memory device coupled with the one or more processors, and a data communications interface operably associated with the one or more processors, where the memory device contains a plurality of program instructions that, when executed by the one or more processors, cause the computing apparatus to perform the method as described above.

In some embodiments of the invention, a non-transitory computer storage medium encoded with a computer program is provided, where the computer program includes a plurality of program instructions that when executed by one or more processors cause the one or more processors to perform the method as described above.

This summary is provided to introduce a selection of concepts in a simplified form that are further described below in the detailed description. This summary is not intended to identify key features or essential features of the claimed subject matter, nor is it intended to be used in isolation as an aid in determining the scope of the claimed subject matter.

## BRIEF DESCRIPTION OF DRAWINGS

The accompanying drawings, which are incorporated in and constitute a part of this specification, illustrate various embodiments of the invention and, together with a general description of the invention given above and the detailed description of the embodiments given below, serve to explain the embodiments of the invention. In the drawings, like reference numerals refer to like features in the various views.

Figure 1 is an example environment in which a device communicates a request to an optimization server through a resource allocation demand server, according to embodiments of the invention.

Figure 2 illustrates an example process for analyzing a resource allocation request via an optimization instruction set, according to embodiments of the invention.

Figure 3 illustrates an example process for simulating a resource allocation schedule via a simulation instruction set, according to embodiments of the invention.

Figure 4 is a flowchart of an example process for providing a resource allocation schedule based on a resource allocation request, according to embodiments of the invention.

Figure 5 illustrates an example portion of an optimization process for node allocation for a queue at two different intervals, according to embodiments of the invention.

Figure 6 is a chart illustrating demand and node capacity in tasks processed per period, according to embodiments of the invention.

Figure 7 is a block diagram showing an example computer architecture for a computer capable of executing the software components described herein, according to embodiments described herein.

## DETAILED DESCRIPTION

Generally, systems, methods, devices, and techniques are provided for implementing an optimization model to determine optimal node allocation during a plurality of time intervals of a given time period. In embodiments, a robust optimization model is provided and implemented that may improve node allocation efficiency while simultaneously taking the adjacency of grouped nodes into consideration. In embodiments, check-in desks to be efficiently assigned at ground handler level (as opposed to flight level) based on a number passengers during periodic intervals of time (e.g., 30 minutes) throughout a particular time period (e.g., a day) to cope with the dynamic variations in passenger demand. The optical node allocation may reduce passenger waiting costs, as well as desks operating costs.

The optimal node allocation provided by the optimization model may address, for example, problems associated with providing an optimization process for resource/node allocation that accounts for node adjacencies (e.g., check-in desks) at the resource level (e.g., a ground handler level), as opposed to accounting for node adjacencies at the task schedule level (e.g., flight schedule). The robust optimization model may improve node allocation efficiency while simultaneously considering adjacency of grouped nodes. Check-in desks may be efficiently assigned at the ground handler level (as opposed to flight level) based on a number passengers during periodic intervals of time (e.g., 30 minutes) throughout a particular time period (e.g., a day) to cope with dynamic passenger demand. In embodiments, a simulation instruction set can be provided with the determined number of desks for each time interval from the optimization model to compute the predicted quality of service measures (e.g., waiting time, queue size, etc.) for each time interval. In embodiments, the optimization model may further involve a physical distance constraint (e.g., a "social distancing" constraint) while passengers are waiting in the queue.

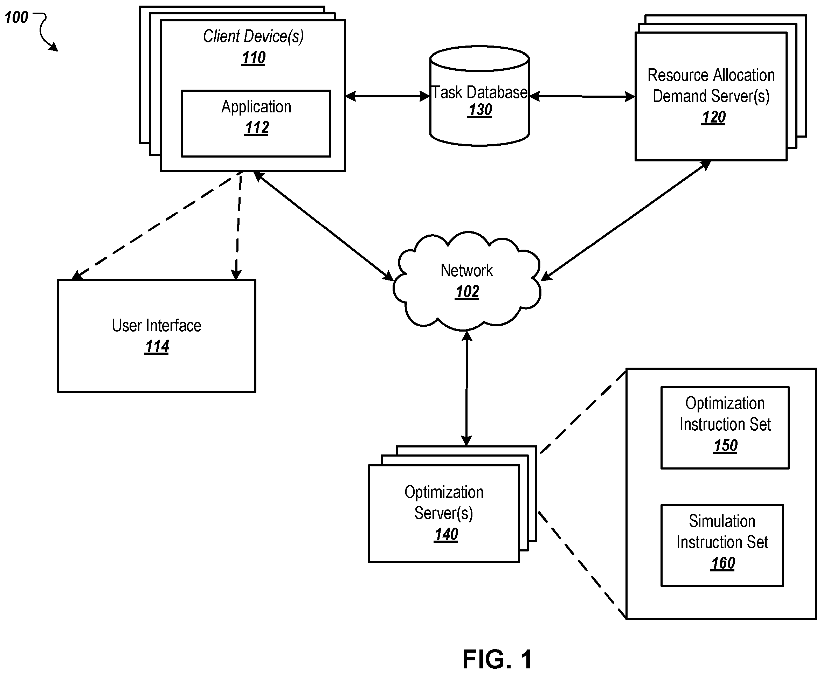

**Figure 1** is an example environment 100 in which a device communicates a request to an optimization server through a resource allocation demand server. The example environment 100 includes a client device 110, a task database 130, one or more resource allocation demand server(s) 120, and one or more optimization server(s) 140 that communicate over a data communication network 102, e.g., a local area network (LAN), a wide area network (WAN), the Internet, a mobile network, or a combination thereof.

The client device 110 can include a desktop, a laptop, a server, or a mobile device, such as a smartphone, tablet computer, wearable device (e.g., smartwatch), in-car computing device, and/or other types of mobile devices. The client device 110 includes applications, such as the application 112, for managing the resource allocation request and resource allocation schedule to/from the one or more optimization server(s) 140 via the resource allocation demand server(s) 120. The client device 110 can include other applications. Additionally, the client device 110 includes a display that provides a graphical user interface (GUI) 114. Accordingly, in the event that a user of the client device 110 initiates a resource allocation request via the application 112, a corresponding display is generated via the user interface 114.

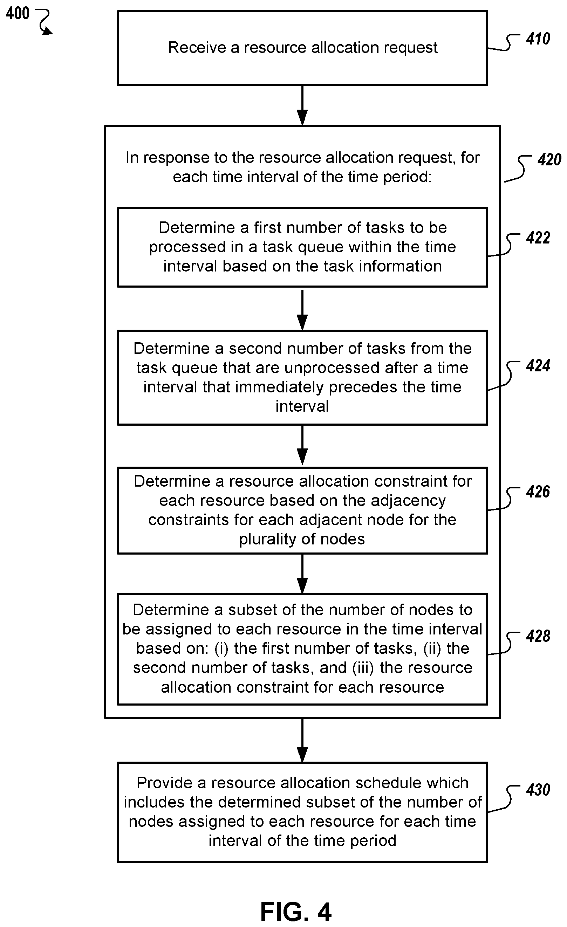

The application 112 and user interface 114 may be hosted by an application stored on the client device 110 or may be a web browser application. The user interface 114 may be responsive to user input to provide input to the application 112 to generate a resource allocation request. The inputs may include a selection of particular tasks to completed (e.g., by the one or more optimization server(s) 140), and include certain parameters or constraints that the user desires, as further discussed herein (e.g., quality of service measures, etc.). In some embodiments of the invention, the user interface 114 may be utilized to set the constraints for the optimization model, initiate the processing by the optimization and simulation modules by the one or more optimization server(s) 140, allow a user to view the results of the optimization and simulation modules, and allow a user to modify the inputs accordingly. The processes of the optimization and simulation modules are further discussed herein with reference to process 400 of Figure 4.

The resource allocation demand server(s) 120 manages the location of the task requests (e.g., resource allocation requests) received from application 112 from one or more client devices 110. The task management protocols of the allocation demand server 120 may be based on a redundant load-balancing system by managing multiple clients (e.g., client device(s) 110) so that a task is handled by one optimization server 140. For example, there may be multiple optimization servers 140 that are able to service the requested task, and the redundant load-balancing system of the resource allocation demand server(s) 120 is responsible for ensuring that the task is performed by exactly one of the capable optimization servers 140.

The resource allocation demand server(s) 120 may be front end server(s) for managing, collecting, processing, and communicating tasks and task schedule data, resource information, node information, etc., from one or more other sources (not illustrated). Additionally, the resource allocation demand server(s) 120 can store some or all of the information in a task database 130, which can be accessed by the application 112 on the client device 110. In an exemplary embodiment, for an airport check-in desk allocation example, the resource allocation demand server(s) 120 may be front end server(s) for collecting, processing, and storing travel information (e.g., flight schedules, flight information, passenger information, ground handler availability, check-in desk location information, i.e., adjacencies of congruent desks, and the like) from a plurality of external travel systems (e.g., airport information systems, airline information systems, third-party intermediator systems, etc.).

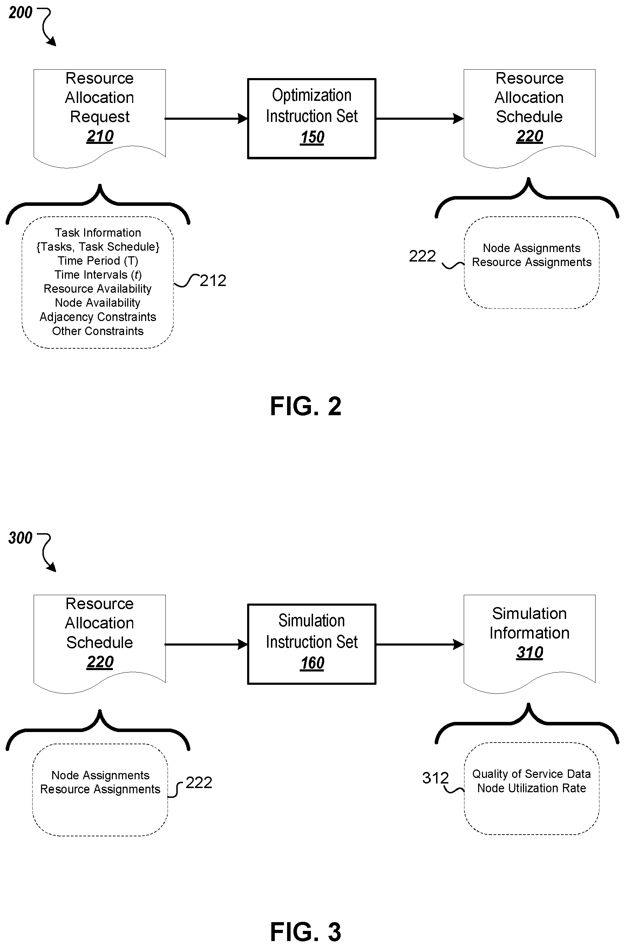

The one or more optimization server(s) 140 receives and processes the resource allocation requests from the resource allocation demand server(s) 120. The optimization server(s) 140 include an optimization instruction set 150 and a simulation instruction set 160. The optimization instruction set 150 is configured to implement a robust optimization model to improve node allocation efficiency while simultaneously considering adjacency of grouped nodes. The simulation instruction set 160 is configured to run a simulation based on the output of the optimization instruction set 150 and compute a quality of service measure (e.g., waiting time, queue size, etc.) for each time interval based on the number of nodes to be assigned to each resource for each time interval. These actions of the optimization instruction set 150 and the simulation instruction set 160 are further described herein with reference to the illustrations in Figure 2 and Figure 3, respectively.

**Figure 2** illustrates an example process for analyzing a resource allocation request via an optimization instruction set, according to embodiments of the invention. For example, the optimization instruction set 150, stored on an optimization server 140, receives a resource allocation request 210 from a resource allocation demand server(s) 120, and determines a resource allocation schedule 220. The resource allocation request 210 may include information 212 such as task information (e.g., tasks, task containers, task schedule(s), etc.), a time period (T), time intervals ($t$) for the schedule (e.g., 30 minute time slots), resource availability, node availability, adjacency constraints for the nodes, and other constraints. For an airport check-in desk allocation example, the task information may include passenger information (e.g., task information), flight information (e.g., task container information), and a flight schedule (e.g., task schedule). Resource availability may include ground handler availability. Node availability and adjacency constraints may refer to check-in desk information, such as locations, and whether any particular check-in desks are adjacent such that a resource (e.g., ground handler) could work at both nodes (e.g., check-in desks) at the same time during the same time interval. The resource allocation schedule 220 may include information 222 such as node assignments and resource assignments. For the airport check-in desk allocation example, the resource allocation schedule 220 may include a resource allocation schedule for each ground handler for each check-in desk at a particular time interval (e.g., 30 minutes) for a particular time period (e.g., a work day at an airport, i.e., 18 hours).

The optimization instruction set 150 (e.g., an optimization model), as described herein, receives a number of variables (e.g., input data from the resource allocation request 210, i.e., via user interface 114), and calculates a number of decision variables based on one or more formulaic computations. For example, input variables can include one or more of the following:

$G$ set of resources (e.g., ground handlers) indexed by $g$;
$F_g$ set of task containers (e.g., flights) from resources $g$ indexed by $j$;
$T$ optimization window (e.g., a time period, such as an 18-hour day) separated in time intervals $t$ (e.g., 30-minute time slots);
$M$ set of time intervals of equal length indexed by $t$ dividing $T$;
$p_j$ average node (e.g., check-in desk) service time for task container $j$;
$d_{j,t}$ number of tasks (e.g., passengers) showing up at the nodes for task container $j$ in time interval $t$;
$S_t$ cost for opening a node during time interval $t$;
$H_j$ task waiting cost for task container $j$;
$A_{j,t}$ $J \times M$ matrix; the coefficient $a_{j,t}$ is equal to 1 from the first time interval t when the registration window (e.g., check-in time) for task container $j$ is closed until the end of the optimization window $T$; and 0 in all other time intervals;
$c$ available processing time for a node during an interval $t$;
$\alpha$ maximum percentage of a task demand of a given interval $t$ to be served in the next interval ($t + 1$);
$I_{max}$ maximum number of tasks of a given interval $t$ to be served in the next interval ($t + 1$); and
$B_{max}$ maximum number of nodes available.

In some embodiments of the invention, the decision variables as determined by the optimization instruction set 150 (e.g., optimization module outputs) are results of the optimization process, and can include one or more of the following:

$q_{j,t}$ number of tasks (e.g., passengers) of task container (e.g., flight) $j$ to be accepted in time interval $t$;
$B_{g,t}$ number of nodes (e.g., check-in desks) to be assigned to resource (e.g., ground handler) $g$ in time interval $t$;
$I_{j,t}$ number of tasks in a queue for task container $j$ at the end of time interval $t$;
$b_{g,t}$ maximum index of nodes assigned to resource $g$ during time interval $t$ (resource $g$ operates on nodes indexed from $b_{g,t} - B_{g,t}$ to $b_{g,t}$);
$o_{g,g'} = 1$ if resource $g$ is assigned to nodes with higher indices than resource $g'$ and 0 otherwise; and
$z_{g,t} = 1$ if the number of nodes to open in period t for resource g is greater than in period $t$-1.

In some embodiments of the invention, an objective function of the optimization instruction set 150 (e.g., results of the optimization process), can include a linear program to minimize the waiting cost and the node (e.g., check-in desk) operating costs over the optimization window $T$ (e.g., a working day). For example, the objective function, utilizing the variables described herein, may be based on the following formula:

$$\min \quad \sum_{g,j} (H_j I_{j,t} + S_t B_{g,t})$$
.

In some embodiments of the invention, a constraint can be utilized by the optimization process to model the task processing flow (e.g., passenger flow) from the arrival up to the service. The passenger demand in the time interval plus the number of passengers not served in the previous interval may be equal to the number of passenger served in this interval plus the passengers that will be served in a later interval. For example, the task processing flow constraint, utilizing the variables described herein, may be based on the following formula:

$$\text{s.t.} \qquad I_{j,t-1} + d_{j,t} - I_{j,t} - q_{j,t} = 0 \qquad \forall g \in G, j \in J_g, t \in M$$

In some embodiments of the invention, a constraint can be utilized by the optimization process to represent the capacity of each nodes in term of number of jobs they can process within a time interval. For example, the capacity constraint, utilizing the variables described herein, may be based on the following formula:

$$\sum_{J_g} p_j q_{j,t} \le c B_{g,t} \qquad \forall g \in G, t \in M$$

In some embodiments of the invention, a constraint can be utilized by the optimization process to limit the total number of nodes (e.g., desks) available. For example, the limiting nodes constraint, utilizing the variables described herein, may be based on the following formula:

$$\sum_{g} B_{g,t} \le B_{\max} \qquad t \in M$$

In some embodiments of the invention, a constraint can be utilized by the optimization process that requires all tasks (e.g., passengers) to be served at the end of the task container's (e.g., flight's) registration window (e.g., check-in period). For example, the registration window constraint, utilizing the variables described herein, may be based on the following formula:

$$A_{j,t} I_{j,t} = 0 \qquad \forall g \in G, j \in J_g, t \in M$$

In some embodiments of the invention, a constraint can be utilized by the optimization process to determine a quality of service of the queueing system by limiting the number of tasks (e.g., passengers) to be served in the next period (t - 1), hence the waiting time by setting the limit in terms of a fraction of task demand. For example, the queue quality of service constraint via a task demand, utilizing the variables described herein, may be based on the following formula:

$$\sum_{J} I_{j,t} \le \alpha \sum_{J} (d_{j,t} + I_{j,t-1}) \qquad \forall j \in J, t \in M$$

In some embodiments of the invention, a constraint can be utilized by the optimization process to determine a quality of service of the queueing system by limiting the number of tasks (e.g., passengers) to be served in the next period (t - 1), hence the waiting time by setting the limit in terms of a number of tasks. For example, social distancing constraints translates in limiting the number of passengers in the queue for the check-in desks. This number is dictated by the limited space in a terminal to accommodate waiting queues when people must be separated by some distance (e.g., 2 meters of separation). For example, some computing systems include a limited buffer size to store incoming tasks, if there are more tasks coming during a time interval, a larger number of nodes should be included by the buffer in order to avoid an overflow. The queue quality of service constraint via a number of tasks, utilizing the variables described herein, may be based on the following formula:

$$\sum_{J} I_{j,t} \le I_{\max} \qquad \forall j \in J, t \in M$$

In some embodiments of the invention, a constraint can be utilized by the optimization process to provide domains of the decision variables. For example, the constraint of the domains of the decision variables, utilizing the variables described herein, may be based on the following formula:

$$q_{j,t}, B_{g,t}, I_{j,t} \in N \qquad \forall g \in G, j \in J_g, t \in M$$

In some embodiments of the invention, the size of the linear program and the constraints discussed herein, may be based on a number of variables: $\mathcal{O}(|JM|)$ since $|G| << |J|$; and a number of constraints: $\mathcal{O}(|JM|)$.

In some embodiments of the invention, the linear program can further include adjacency constraints that are applied at a resource (e.g., ground handler) level. As noted herein, the variable $b_{g,t}$ defines the maximum node index (e.g., desk index, i.e., desk position) assigned to a resource (e.g., ground handler) $g$ in time interval $t$. Consequently, resource $g$ operates on node indices from $b_{g,t}$ - $B_{g,t}$ to $b_{g,t}$ during time interval $t$.

In some embodiments of the invention, the linear program that includes adjacency constraints can include a constraint that can be utilized by the optimization process to set the lower and upper limit for the maximum node index. For example, the constraint for setting the lower and upper limit for the maximum node index may be based on the following formula:

$$B_{g,t} \leq b_{g,t} \leq B_{\max} \qquad \forall g \in G, t \in M$$

In some embodiments of the invention, an adjacency constraint can be utilized by the optimization process to ensure that the node range (e.g., desk range) assigned to each resource (e.g., ground handler) does not overlap. For example, the adjacency constraint of the domains of the decision variables may be based on the following formula:

$$b_{g,t} + B_{g',t} \leq b_{g',t} \text{ or } b_{g',t} + B_{g,t} \leq b_{g,t} \qquad \forall (g, g') \in G^2, t \in M$$

where on the left-hand side of the "or", resource $g'$ is assigned to nodes with higher indices than resource $g$, and the opposite is true for the right-hand side of the "or", where resource $g'$ is assigned to nodes with lower indices than resource $g$.

In some embodiments of the invention, an adjacency constraint can be utilized by the optimization process to ensure that that there are no more nodes (e.g., check-in desks) opening than necessary in case of increase of the number of nodes assigned to resource (e.g., ground handler) $g$ between the prior period $t$- 1 and the current period $t$. For example, the adjacency constraint to ensure that that there are no more nodes opening than necessary may be based on the following formula:

$$b_{g,t} - b_{g,t-1} \leq \max\{0, B_{g,t} - B_{g,t-1}\} \qquad \forall g \in G, t \in M$$

In some embodiments of the invention, an adjacency constraint can be utilized by the optimization process to ensure that that there are no more nodes (e.g., check-in desks) closing than necessary in case of decrease of the number of nodes assigned to resource (e.g., ground handler) $g$ between the prior period $t$- 1 and the current period $t$. For example, the constraint to ensure that that there are no more nodes closing than necessary may be based on the following formula:

$$b_{g,t-1} - b_{g,t} \leq \max\{0, B_{g,t-1} - B_{g,t}\} \qquad \forall g \in G, t \in M$$

In some embodiments of the invention, for the optimization process with adjacency constraints described herein, an assumption can be made that all resources (e.g., ground handlers) operate continuously during the day. For example, there is no resource $g$ such that there is a period $t$ in which the number of open nodes is $B_{g,t} = 0$ and some periods $t^- < t < t^+$ such that $B_{g,t^-}$ and $B_{g,t^+} > 0$ and resources are assigned contiguous nodes, then if one resource is assigned higher node indices during a period, this will remain true for the time period (e.g., optimization window $T$). Thus, the following linear program and subsequent formulas and constraints will also include adjacency constraints that are applied at a resource (e.g., ground handler) level, but with the stated assumption that all resources operate continuously during the day. For example, variable o does not need to be indexed by $t$ since resources relative positions are valid for the optimization window $T$. Therefore, the following linear program implementation includes an optimization model with adjacency constraints and linearized constraints.

In some embodiments of the invention, an adjacency and linearized constraint can be utilized by the optimization process to ensure that the node range (e.g., desk range) assigned to each resource (e.g., ground handler) does not overlap using the linearized form for a disjunctive constraint with variable $o_{g,g'}$. For example, adjacency and linearized constraints to ensure that the node range assigned to each resource does not overlap may be based on the following formulas:

$$b_{g,t} + B_{g',t} \leq b_{g',t} + B_{\max} o_{g,g'} \qquad \forall (g, g') \in G^2, t \in M$$

$$b_{g',t} + B_{g,t} \leq b_{g,t} + B_{\max}(1 - o_{g,g'}) \qquad \forall (g, g') \in G^2, t \in M$$

In some embodiments of the invention, an adjacency and linearized constraint can be utilized by the optimization process to ensure that that there are no more nodes (e.g., check-in desks) opening than necessary in case of increase of the number of nodes assigned to resource (e.g., ground handler) $g$ between period $t$- 1 and $t$. For example, the adjacency and linearized constraint to ensure that that there are no more nodes opening than necessary may be based on the following formulas:

$$-B_{\max} z_{g,t} \leq B_{g,t} - B_{g,t-1} \qquad \forall g \in G, t \in M$$

$$B_{g,t} - B_{g,t-1} \leq B_{\max}(1 - z_{g,t}) \qquad \forall g \in G, t \in M$$

$$b_{g,t} - b_{g,t-1} \leq B_{g,t} - B_{g,t-1} + B_{\max} z_{g,t} \qquad \forall g \in G, t \in M$$

$$b_{g,t} - b_{g,t-1} \leq B_{\max}(1 - z_{g,t}) \qquad \forall g \in G, t \in M$$

In some embodiments of the invention, an adjacency and linearized constraint can be utilized by the optimization process to ensure that that there are no more nodes (e.g., check-in desks) closing than necessary in case of decrease of the number of nodes assigned to resource (e.g., ground handler) $g$ between period $t$- 1 and $t$. For example, the adjacency and linearized constraint to ensure that that there are no more nodes closing than necessary may be based on the following formula:

$$b_{g,t-1} - b_{g,t} \leq B_{g,t-1} - B_{g,t} + B_{\max}(1 - z_{g,t}) \quad \forall g \in G, t \in M$$

$$b_{g,t-1} - b_{g,t} \leq B_{\max} z_{g,t} \qquad \forall g \in G, t \in M$$

In the foregoing adjacency and linearized constraints that ensure that that there are no more nodes opening (or closing) than necessary in case of increase (or decrease) of the number of nodes assigned to resource $g$ between period $t$- 1 and $t$, the following formulaic properties and remarks are applied. For example, a first property includes constraint $x \leq \max(0, y)$ with lower and upper bounds on the value of $y$: $L \leq y \leq U$, can be modelled using the following linear constraints:

$$Lz \leq y$$

$$y \leq U(1 - z)$$

$$x \leq y - Lz$$

$$x \leq U(1 - z)$$

$$z \in \{0, 1\}$$

where variable $z$ is tied to the sign of $y$: $z = 0 \leftrightarrow y \geq 0$ and $z = 1 \leftrightarrow y \leq 0$. In some embodiments of the invention, $y$ corresponds to the difference of the number nodes (e.g., desks) to be opened for a given resource (e.g., ground handler) between two consecutive time intervals (e.g., $t$ and $t + 1$). Thus, given the limit on the number of available nodes $B_{max}$, this difference can be bounded by the following equation:

$$-B_{\max} \leq y \leq B_{\max}$$

Additionally, given that the linear form of the constraint $x \leq \max(0, y)$ uses an additional variable tied to the sign of y (e.g., the first property), the system of the following equation:

$$\begin{cases} x \leq \max(0, y) \\ -x \leq \max(0, -y) \end{cases}$$

also needs only one variable to control for the sign of $y$; $z$ being replaced by 1 - z in the constraints modelling equating $-x \leq$ max(0,-$y$). Thus, the linear constraints (e.g., $Lz \leq y$... etc.) are duplicated constraints in the linear form of the system defined by the above equations (e.g., $-x \leq$ max(0,-$y$)) for the problem of node (e.g., check-in desk) assignment.

In some embodiments of the invention, the size of the linear program and the adjacency constraints and linearized constraints discussed herein, may be based on a number of variables: $\mathcal{O}(|JM|)$ since $|G| << |J|$; and a number of constraints: $\mathcal{O}(|JM|)$.

**Figure** 3 illustrates an example process for simulating a resource allocation schedule via a simulation instruction set, according to embodiments of the invention. For example, the simulation instruction set 160, stored on an optimization server 140, receives a resource allocation schedule 220 from the optimization instruction set 150, and determines simulation information 310 (e.g., runs a simulation analysis). The resource allocation schedule 220 may include information 222 such as node assignments and resource assignments. For the airport check-in desk allocation example, the resource allocation schedule 220 may include a resource allocation schedule for each ground handler for each check-in desk at a particular time interval (e.g., 30 minutes) for a particular time period (e.g., a work day at an airport, i.e., 18 hours). The simulation information 310 may include information 312 such as quality of service data and node utilization rates. For the airport check-in desk allocation example, a check-desk utilization rate, e.g., 95%, would mean that opened desks are busy 95% of the time, or, in other words, that the check-in desks are idle 5% of the time. The simulation information 310 may be requested specifically by the resource allocation request 210 by a user at the client device 110 via user interface 114. Additional details regarding and related formulaic computations for implementing a simulation model and simulate the optimal node allocation during a plurality of time intervals $t$ of a given time period $T$ from an optimization model is further described herein with reference to process 400 of Figure 4.

**Figure** 4 illustrates a flowchart of an example process 400 for determining optimal node allocation during a plurality of time intervals of a given time period. Operations of the process 400 can be implemented, for example, by a system that includes one or more data processing apparatus, such as one or more optimization server(s) 140 of Figure 1. The process 400 can also be implemented by instructions stored on computer storage medium, where execution of the instructions by a system that includes a data processing apparatus cause the data processing apparatus to perform the operations of the process 400.

The system receives a resource allocation request (410). For example, an optimization server 140 receives a resource allocation request 210 from an application 112 on a client device 110 via the resource allocation demand server 120. In an exemplary implementation, a resource allocation request includes task information (e.g., passenger information) based on a task schedule (e.g., a flight schedule), a time period (T) including a plurality of time intervals ($t$), a number of resources available during each time interval (e.g., ground handler availability), a number of nodes available during each time interval (e.g., check-in desk availability), and adjacency constraints for each adjacent node of the plurality of nodes.

The system processes the resource allocation request for each time interval of the time period (420) via blocks 422-428. In an exemplary implementation, the optimization instruction set 150 computes the number of nodes available (e.g., check-in desks availability) during each time interval ($t$) based on a number of decision variables as described below in regard to process blocks 422-428, and additional decision variables further described herein.

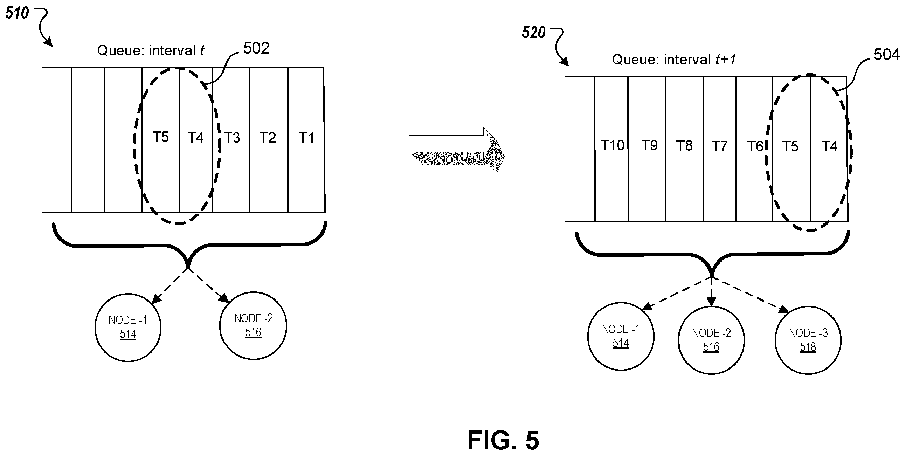

The system determines a first number of tasks to be processed in a task queue within the time interval ($t$) based on the task information (422). For example, based on the received task information, task schedule, time period, time intervals, a number of resources available during each time interval, a number of nodes available during each time interval, and adjacency constraints for each adjacent node, the optimization instruction set 150 can determine a number of tasks (e.g. passengers) that can be processed during the first time period ($t$), as illustrated in queue 510 in Figure 5.

The system determines a second number of tasks from the task queue that are unprocessed after a time interval (424). For example, passengers in queue from prior time interval ($t$-1) that immediately precedes the time interval. For example, queue 510 of Figure 5 has two passengers that are unprocessed during the time interval $t$.

The system determines, based on the adjacency constraints for each adjacent node for the plurality of nodes, a resource allocation constraint for each resource (426). For example, the system ensures that the desk range assigned to each ground handler does not overlap.

The system determines a subset of the number of nodes to be assigned to each resource in the time interval based on: (i) the first number of tasks, (ii) the second number of tasks, and (iii) the resource allocation constraint for each resource (428). For example, the system determines a subset of a number of check-in desks to be assigned to each ground handler in the time interval ($t$) based on the number of passengers in the current time interval and the unprocessed passengers in the previous time interval ($t$-1), as illustrated in Figure 5.

Following the system determining a subset of the number of nodes to be assigned to each resource in the time interval for each time interval of block 420 (e.g., blocks 422-428), the system provides a resource allocation schedule which includes the determined subset of the number of nodes assigned to each resource for each time interval of the time period (430). For an airport check-in desk allocation example, the resource allocation schedule may include a detailed list for each available ground handler a schedule for each time interval for a working day of where to staff each ground handler and to which adjacent check-in desks at each time interval (e.g., a staffing schedule for each 30 minute block).

In some embodiments of the invention, the process 400 further includes computing, via a simulation model (e.g., simulation instruction set 160), a quality of service measure for each time interval based on the number of nodes to be assigned to each resource for each time interval. In some embodiments of the invention, the quality of service measure includes at least one of a waiting time for each task to be processed and a queue size for each node.

In some embodiments of the invention, the resource allocation request further includes a maximum number of available nodes (e.g., maximum number of desks available, i.e., $B_{max}$), and determining the number of nodes to be assigned to each resource for each time interval is further based on the maximum number of available nodes.

In some embodiments of the invention, the resource allocation request further includes a social distance constraint and determining the number of nodes to be assigned to each resource for each time interval is further based on the social distance constraint. For example, social distancing constraints translates in limiting the number of passengers in the queue for the check-in desks. This number is dictated by the limited space in a terminal to accommodate waiting queues when people must be separated by some distance (e.g., 2 meters of separation). For example, some computing systems include a limited buffer size to store incoming tasks, if there are more tasks coming during a time interval, a larger number of nodes should be included by the buffer in order to avoid an overflow.

In some embodiments of the invention, the resource allocation request further includes a quality of service constraint and determining the number of nodes to be assigned to each resource for each time interval is further based on the quality of service constraint (e.g., waiting time, queue size).

In some embodiments of the invention, the resource allocation request further includes a passenger flow constraint and determining the number of nodes to be assigned to each resource for each time interval is further based on the passenger flow constraint. For example, system processes described herein may model the passenger flow from the arrival up to the time of service. For example, passenger demand in the time interval plus the number of passengers not served in the previous interval is equal to the number of passengers served in this interval plus the passengers that will be served in a later interval.

In some embodiments of the invention, the resource allocation request further includes determining a change in a number of nodes available to the resource from the time interval and the time interval that immediately precedes the time interval and determining the number of nodes available to the resource for each time interval. For example, for the check-in desk availability scenario, the determining a change in a number of nodes available to the resource between subsequent time intervals may be based on a constraint that can allow the optimization model to force all passengers to be served at the end of a flight's (e.g., a task container) check-in period.

In some embodiments of the invention, the optimization process of process 400 can take an assumption, of the calculations, that all resources (e.g., ground handlers) operate continuously during the day (i.e. there is no ground handler $g$ such that there is a period $t$ in which the number of open desks is nil and some periods are not, and resources are assigned contiguous nodes, such that if one resource is assigned higher node indices during a time interval t, this will remain true for the entire time period (e.g., optimization window $T$).

**Figure 5** illustrates an example portion of an optimization process for node allocation for a queue at two different intervals, according to embodiments of the invention. For example, queue 510 illustrates a first time interval $t$ where all tasks to be processed (e.g., T1-T5) during time interval $t$ have arrived simultaneously. Additionally, at time interval $t$, there are two nodes available to process the tasks, Node-1 514 and Node-2 516 (e.g., a number of check-in desks available based on passenger demand), which are minimized with respect to any additional constraints applied during the optimization process. Based on node capacity and processing capabilities at each node, only tasks T1-T3 are able to be processed (e.g., passengers checked-in) during time interval t, thus tasks T4 and T5 have not been processed as illustrated in area 502, and are still waiting in line for the subsequent time interval. Thus, queue 520 illustrates the second, subsequent time interval $t + 1$, where all new tasks to be processed (e.g., T6-T10) during time interval $t + 1$ have arrived simultaneously, with the remaining tasks from the prior time interval $t$, T4 and T5, as illustrated in area 504. However, at the subsequent time interval $t + 1$, there are now three nodes available to process the tasks, Node-1 514, Node-2 516, and Node-3 518 (e.g., a number of check-in desks available based on passenger demand).

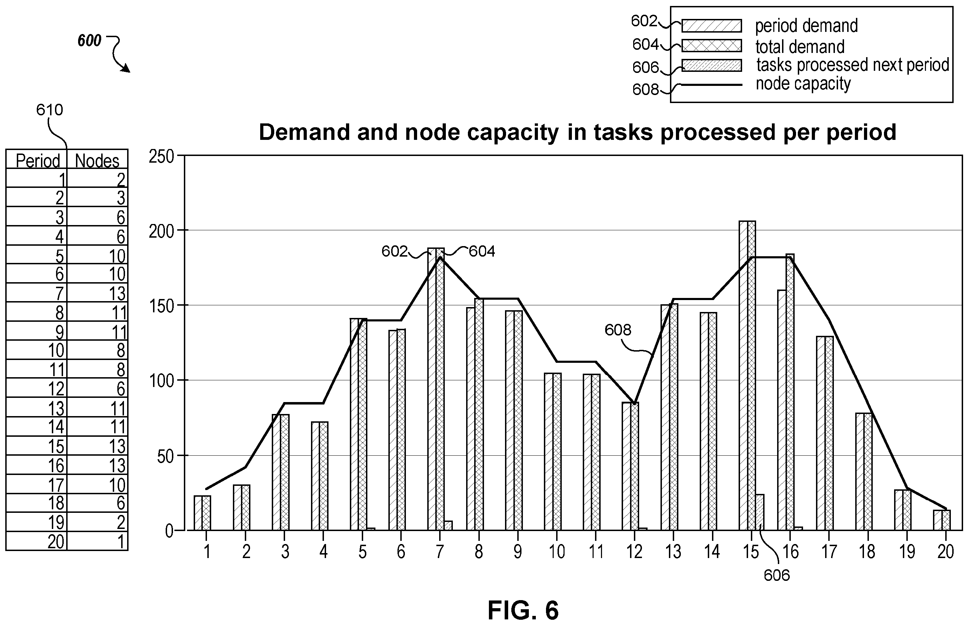

**Figure 6** is a chart 600 illustrating demand and node capacity in tasks processed per period, according to embodiments of the invention. For example, chart 600 illustrates twenty time intervals $t$ (e.g., periods 1-20) over an optimization window or time period T (e.g., a 10-hour work day broken up into 30 min increments or periods). Where for each period, the optimization processes described herein is given the number of nodes available for each period (e.g.,

period 1 has an availability of 2 nodes, period 8 has an availability 11 nodes, etc.), as illustrated in table 610. The period demand 602 indicates the number of tasks to be processes during each time interval (e.g., passengers arriving during the 30-minute increment period). The total demand 604 indicates a total demand of the task to be processed which includes the current tasks to be processed plus the tasks that were not processed in the previous time interval (e.g., passengers arriving currently plus the passengers not checked in the previous 30-minute time slot). The tasks processed next period 606 indicates tasks that will be served in the next time interval $t + 1$ (e.g., passengers to be checked in during the next period). The node capacity 608 indicates a node capacity of a number of tasks that can be processed per interval (e.g., desk capacity in number of passengers that can be check in per interval), based on the number of nodes available.

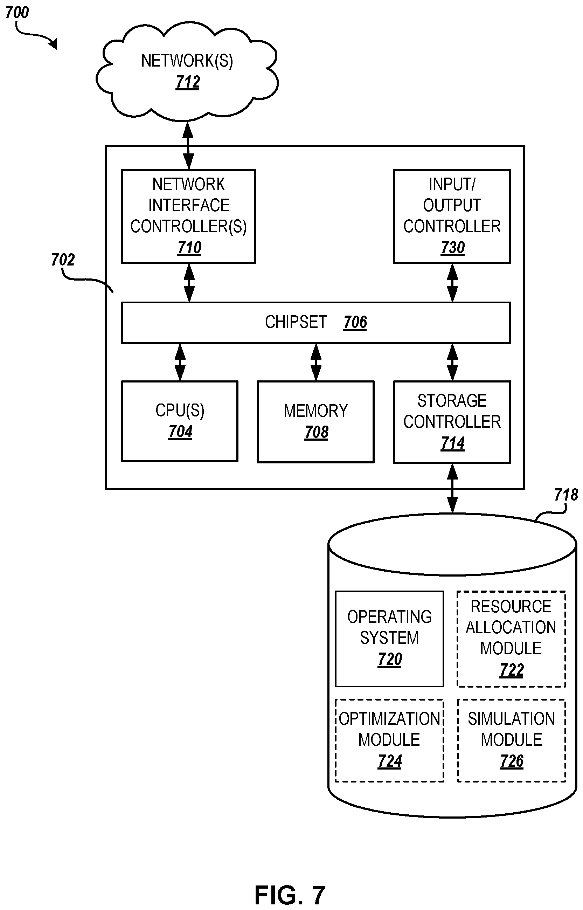

**Figure 7** illustrates an example computer architecture 700 for a computer 702 capable of executing the software components described herein for the sending/receiving and processing of tasks for the CA components. The computer architecture 700 (also referred to herein as a "server") shown in Figure 7 illustrates a server computer, workstation, desktop computer, laptop, or other computing device, and may be utilized to execute any aspects of the software components presented herein described as executing on a host server, or other computing platform. The computer 702 preferably includes a baseboard, or "motherboard," which is a printed circuit board to which a multitude of components or devices may be connected by way of a system bus or other electrical communication paths. In one illustrative embodiment, one or more central processing units (CPUs) 704 operate in conjunction with a chipset 706. The CPUs 704 can be programmable processors that perform arithmetic and logical operations necessary for the operation of the computer 702.

The CPUs 704 preferably perform operations by transitioning from one discrete, physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits, including registers, adders-subtractors, arithmetic logic units, floating-point units, or the like.

The chipset 706 provides an interface between the CPUs 704 and the remainder of the components and devices on the baseboard. The chipset 706 may provide an interface to a memory 708. The memory 708 may include a random access memory (RAM) used as the main memory in the computer 702. The memory 708 may further include a computer-readable storage medium such as a read-only memory (ROM) or non-volatile RAM (NVRAM) for storing basic routines that that help to startup the computer 702 and to transfer information between the various components and devices. The ROM or NVRAM may also store other software components necessary for the operation of the computer 702 in accordance with the embodiments described herein.

According to various embodiments, the computer 702 may operate in a networked environment using logical connections to remote computing devices through one or more networks 712, a local-area network (LAN), a wide-area network (WAN), the Internet, or any other networking topology known in the art that connects the computer 702 to the devices and other remote computers. The chipset 706 includes functionality for providing network connectivity through one or more network interface controllers (NICs) 710, such as a gigabit Ethernet adapter. For example, the NIC 710 may be capable of connecting the computer 702 to other computer devices in the utility provider's systems. It should be appreciated that any number of NICs 710 may be present in the computer 702, connecting the computer to other types of networks and remote computer systems beyond those described herein.

The computer 702 may be connected to at least one mass storage device 718 that provides non-volatile storage for the computer 702. The mass storage device 718 may store system programs, application programs, other program modules, and data, which are described in greater detail herein. The mass storage device 718 may be connected to the computer 702 through a storage controller 714 connected to the chipset 706. The mass storage device 718 may consist of one or more physical storage units. The storage controller 714 may interface with the physical storage units through a serial attached SCSI (SAS) interface, a serial advanced technology attachment (SATA) interface, a fiber channel (FC) interface, or other standard interface for physically connecting and transferring data between computers and physical storage devices.

The computer 702 may store data on the mass storage device 718 by transforming the physical state of the physical storage units to reflect the information being stored. The specific transformation of physical state may depend on various factors, in different embodiments of the invention of this description. Examples of such factors may include, but are not limited to, the technology used to implement the physical storage units, whether the mass storage device 718 is characterized as primary or secondary storage, or the like. For example, the computer 702 may store information to the mass storage device 718 by issuing instructions through the storage controller 714 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope of the present description, with the foregoing examples provided only to facilitate this description. The computer 702 may further read information from the mass storage device 718 by detecting the physical states or characteristics of one or more particular locations within the physical storage units.

The mass storage device 718 may store an operating system 720 utilized to control the operation of the computer 702. According to some embodiments, the operating system includes the LINUX operating system. According to another embodiment, the operating system includes the WINDOWS® SERVER operating system from MICROSOFT Corporation of Redmond, Wash. According to further embodiments, the operating system may include the UNIX or SOLARIS operating systems. It should be appreciated that other operating systems may also be utilized. The mass storage device 718 may store other system or application programs and data utilized by the computer 702, such as a resource allocation module 722 to manage communications in a communication network for resource demand communications, an optimization module 724 to execute an optimization process, and a simulation module 726 to execute a simulation process, according to embodiments described herein.

In some embodiments, the mass storage device 718 may be encoded with computer-executable instructions that, when loaded into the computer 702, transforms the computer 702 from being a general-purpose computing system into a special-purpose computer capable of implementing the embodiments described herein. These computer-executable instructions transform the computer 702 by specifying how the CPUs 704 transition between states, as described above. According to some embodiments, from the host server 106 perspective, the mass storage device 718 stores computer-executable instructions that, when executed by the computer 702, perform portions of the process 400 for determining optimal node allocation during a plurality of time intervals of a given time period, as described herein. In further embodiments, the computer 702 may have access to other computer-readable storage medium in addition to or as an alternative to the mass storage device 718.

The computer 702 may also include an input/output controller 730 for receiving and processing input from a number of input devices, such as a keyboard, a mouse, a touchpad, a touch screen, an electronic stylus, or other type of input device. Similarly, the input/output controller 730 may provide output to a display device, such as a computer monitor, a flat-panel display, a digital projector, a printer, a plotter, or other type of output device. It will be appreciated that the computer 702 may not include all of the components shown in Figure 7, may include other components that are not explicitly shown in Figure 7, or may utilize an architecture completely different than that shown in Figure 7.

In general, the routines executed to implement the embodiments of the invention, whether implemented as part of an operating system or a specific application, component, program, object, module or sequence of instructions, or even a subset thereof, may be referred to herein as "computer program code," or simply "program code." Program code typically includes computer readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer readable program instructions for carrying out operations of the embodiments of the invention may be, for example, assembly language or either source code or object code written in any combination of one or more programming languages.

The program code embodied in any of the applications/modules described herein is capable of being individually or collectively distributed as a program product in a variety of different forms. In particular, the program code may be distributed using a computer readable storage medium having computer readable program instructions thereon for causing a processor to carry out aspects of the embodiments of the invention.

Computer readable storage media, which is inherently non-transitory, may include volatile and non-volatile, and removable and non-removable tangible media implemented in any method or technology for storage of information, such as computer-readable instructions, data structures, program modules, or other data. Computer readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer readable storage medium should not be construed as transitory signals per se (e.g., radio waves or other propagating electromagnetic waves, electromagnetic waves propagating through a transmission media such as a waveguide, or electrical signals transmitted through a wire). Computer readable program instructions may be downloaded to a computer, another type of programmable data processing apparatus, or another device from a computer readable storage medium or to an external computer or external storage device via a network.

Computer readable program instructions stored in a computer readable medium may be used to direct a computer, other types of programmable data processing apparatus, or other devices to function in a particular manner, such that the instructions stored in the computer readable medium produce an article of manufacture including instructions that implement the functions/acts specified in the flowcharts, sequence diagrams, and/or block diagrams. The computer program instructions may be provided to one or more processors of a general purpose computer, special purpose computer, or other programmable data processing apparatus to produce a machine, such that the instructions, which execute via the one or more processors, cause a series of computations to be performed to implement the functions and/or acts specified in the flowcharts, sequence diagrams, and/or block diagrams.

In certain alternative embodiments, the functions and/or acts specified in the flowcharts, sequence diagrams, and/or block diagrams may be re-ordered, processed serially, and/or processed concurrently without departing from the scope of the embodiments of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the invention. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising."

While all of the invention has been illustrated by a description of various embodiments and while these embodiments have been described in considerable detail, it is not the intention of the Applicant to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the scope of the Applicant's general inventive concept.

**Claims**

1. A computing apparatus comprising:

    one or more processors;
    at least one memory device coupled with the one or more processors; and
    a data communications interface operably associated with the one or more processors,
    wherein the at least one memory device contains a plurality of program instructions that, when executed by the one or more processors, cause the computing apparatus to:

    receive, from a resource allocation demand server via the data communications interface, a resource allocation request which includes task information based on a task schedule, a time period including a plurality of time intervals, a number of resources available during each time interval, a number of nodes available during each time interval, and adjacency constraints for each adjacent node of the number of nodes;
    in response to the resource allocation request, for each time interval of the time period:

    determine a first number of tasks to be processed in a task queue within the time interval based on the task information;
    determine a second number of tasks from the task queue that are unprocessed after a time interval that immediately precedes the time interval;
    determine, based on the adjacency constraints for each adjacent node for the number of nodes, a resource allocation constraint for each resource; and
    determine a subset of the number of nodes to be assigned to each resource in the time interval based on: (i) the first number of tasks, (ii) the second number of tasks, and (iii) the resource allocation constraint for each resource; and

    provide, to the resource allocation demand server via the data communications interface, a resource allocation schedule which includes the subset of the number of nodes assigned to each resource for each time interval of the time period.

2. The computing apparatus of claim 1, wherein the plurality of program instructions are compiled to cause the computing apparatus to:
compute, via a simulation model, a quality of service measure for each time interval based on the number of nodes to be assigned to each resource for each time interval.

3. The computing apparatus of claim 2, wherein the quality of service measure comprises at least one of a waiting time for the first number of tasks and the second number of tasks to be processed and a queue size for each node.

**4.** The computing apparatus of any of claims 1 to 3, wherein the resource allocation request further includes a maximum number of available nodes, and determining the number of nodes to be assigned to each resource for each time interval is further based on the maximum number of available nodes.

**5.** The computing apparatus of any of claims 1 to 4, wherein the resource allocation request further includes a social distance constraint, and determining the number of nodes to be assigned to each resource for each time interval is further based on the social distance constraint.

**6.** The computing apparatus of any of claims 1 to 5, wherein the resource allocation request further includes a quality of service constraint, and determining the number of nodes to be assigned to each resource for each time interval is further based on the quality of service constraint.

**7.** The computing apparatus of any of claims 1 to 6, wherein the resource allocation constraint includes a change in the number of nodes available to the resource from the time interval and the time interval that immediately precedes the time interval, and determining the number of nodes to be assigned to each resource for each time interval is further based on the number of nodes available to the resource for each time interval.

**8.** The computing apparatus of any of claims 1 to 7, wherein determining the number of nodes to be assigned to each resource for each time interval is further based on determining a flow rate of tasks being processed based on an arrival time, and the resource allocation schedule is based on the flow rate of tasks being processed for each time interval.

**9.** A computer-implemented method, comprising:

receiving, from a resource allocation demand server via a data communications interface, a resource allocation request which includes task information based on a task schedule, a time period including a plurality of time intervals, a number of resources available during each time interval, a number of nodes available during each time interval, and adjacency constraints for each adjacent node of the number of nodes;
in response to the resource allocation request, for each time interval of the time period:

determining a first number of tasks to be processed in a task queue within the time interval based on the task information;
determining a second number of tasks from the task queue that are unprocessed after a time interval that immediately precedes the time interval;
determining, based on the adjacency constraints for each adjacent node for the number of nodes, a resource allocation constraint for each resource; and
determining a subset of the number of nodes to be assigned to each resource in the time interval based on: (i) the first number of tasks, (ii) the second number of tasks, and (iii) the resource allocation constraint for each resource; and

providing, to the resource allocation demand server via the data communications interface, a resource allocation schedule which includes the subset of the number of nodes assigned to each resource for each time interval of the time period.

**10.** The computer-implemented method of claim 9, further comprising:
computing, via a simulation model, a quality of service measure for each time interval based on the number of nodes to be assigned to each resource for each time interval.

**11.** The computer-implemented method of claim 10, wherein the quality of service measure comprises at least one of a waiting time for the first number of tasks and the second number of tasks to be processed and a queue size for each node.

**12.** The computer-implemented method of any of claims 9 to 11, wherein the resource allocation request further includes a maximum number of available nodes, and determining the number of nodes to be assigned to each resource for each time interval is further based on the maximum number of available nodes.

**13.** The computer-implemented method of any of claims 9 to 12, wherein the resource allocation request further includes a social distance constraint, and determining the number of nodes to be assigned to each resource for each time interval is further based on the social distance constraint.

**14.** The computer-implemented method of any of claims 9 to 13, wherein the resource allocation request further includes a quality of service constraint, and determining the number of nodes to be assigned to each resource for each time interval is further based on the quality of service constraint.

**15.** The computer-implemented method of any of claims 9 to 14, wherein the resource allocation constraint includes a change in the number of nodes available to the resource from the time interval and the time interval that immediately precedes the time interval, and determining the number of nodes to be assigned to each resource for each time interval is further based on the number of nodes available to the resource for each time interval.

**16.** The computer-implemented method of any of claims 9 to 15, wherein determining the number of nodes to be assigned to each resource for each time interval is further based on a determining a flow rate of tasks being processed based on an arrival time, and the resource allocation schedule is based on the flow rate of tasks being processed for each time interval.

**17.** A non-transitory computer storage medium encoded with a computer program, the computer program comprising a plurality of program instructions that when executed by one or more processors cause the one or more processors to perform the method according to any one of claims 9 to 16.

**Patentansprüche**

**1.** Eine Rechenvorrichtung, die Folgendes umfasst:

einen oder mehrere Prozessoren;
mindestens eine Speichervorrichtung, die mit dem einen oder den mehreren Prozessoren gekoppelt ist; und
eine Datenkommunikationsschnittstelle, die funktionsfähig mit dem einen oder den mehreren Prozessoren verbunden ist,
wobei die mindestens eine Speichervorrichtung eine Vielzahl von Programmbefehlen enthält, die, wenn sie von dem einen oder den mehreren Prozessoren ausgeführt werden, die Computervorrichtung veranlassen zum:

Empfangen, von einem Ressourcenzuweisungsanforderungsserver über die Datenkommunikationsschnittstelle, einer Anforderung einer Ressourcenzuweisung, die Aufgabeninformationen auf der Grundlage eines Aufgabenplans, einen Zeitraum mit einer Vielzahl von Zeitintervallen, eine Anzahl von während jedes Zeitintervalls verfügbaren Ressourcen, eine Anzahl von während jedes Zeitintervalls verfügbaren Knoten und Nachbarschaftsbeschränkungen für jeden benachbarten Knoten der Anzahl von Knoten enthält;
als Reaktion auf die Anforderung der Ressourcenzuweisung für jedes Zeitintervall des Zeitraums:

Bestimmen auf der Grundlage der Aufgabeninformationen einer ersten Anzahl von Aufgaben, die innerhalb des Zeitintervalls in einer Aufgabenwarteschlange zu bearbeiten sind;
Bestimmen einer zweiten Anzahl von Aufgaben aus der Aufgabenwarteschlange, die nach einem Zeitintervall, das dem Zeitintervall unmittelbar vorausgeht, unbearbeitet sind;
Bestimmen basierend auf den Nachbarschaftsbeschränkungen für jeden benachbarten Knoten für die Anzahl der Knoten einer Ressourcenzuweisungsbeschränkung für jede Ressource; und
Bestimmen einer Teilmenge der Anzahl von Knoten, die jeder Ressource in dem Zeitintervall zugewiesen werden sollen, basierend auf: (i) der ersten Anzahl von Aufgaben, (ii) der zweiten Anzahl von Aufgaben und (iii) der Ressourcenzuweisungsbeschränkung für jede Ressource; und

Bereitstellen, dem Server für die Ressourcenzuweisung über die Datenkommunikationsschnittstelle, eines Zeitplans für die Ressourcenzuweisung, der die Teilmenge der Anzahl der Knoten enthält, die jeder Ressource für jedes Zeitintervall des Zeitraums zugewiesen sind.

**2.** Die Rechenvorrichtung nach Anspruch 1, wobei die Vielzahl von Programmbefehlen kompiliert wird, um die Rechenvorrichtung zu veranlassen zum:
Berechnen, mit Hilfe eines Simulationsmodells, eines Maßes für die Dienstqualität für jedes Zeitintervall basierend auf der Anzahl der Knoten, die jeder Ressource für jedes Zeitintervall zugewiesen werden sollen.

**3.** Die Rechenvorrichtung nach Anspruch 2, wobei das Maß für die Dienstqualität mindestens eine der folgenden Größen umfasst: eine Wartezeit für die erste Anzahl von Aufgaben und die zweite Anzahl von zu verarbeitenden Aufgaben und eine Warteschlangengröße für jeden Knoten.

4. Die Rechenvorrichtung nach einem der Ansprüche 1 bis 3, wobei die Anforderung der Ressourcenzuweisung ferner eine maximale Anzahl verfügbarer Knoten enthält und die Bestimmung der Anzahl der Knoten, die jeder Ressource für jedes Zeitintervall zugewiesen werden sollen, ferner auf der maximalen Anzahl verfügbarer Knoten basiert.

5. Die Rechenvorrichtung nach einem der Ansprüche 1 bis 4, wobei die Anforderung der Ressourcenzuweisung ferner eine soziale Entfernungsbeschränkung enthält und die Bestimmung der Anzahl der Knoten, die jeder Ressource für jedes Zeitintervall zugewiesen werden sollen, ferner auf der sozialen Entfernungsbeschränkung basiert.

6. Die Rechenvorrichtung nach einem der Ansprüche 1 bis 5, wobei die Anforderung der Ressourcenzuweisung ferner eine Dienstqualitätsbeschränkung enthält und die Bestimmung der Anzahl der Knoten, die jeder Ressource für jedes Zeitintervall zugewiesen werden sollen, ferner auf der Dienstqualitätsbeschränkung basiert.

7. Die Rechenvorrichtung nach einem der Ansprüche 1 bis 6, wobei die Ressourcenzuweisungsbeschränkung eine Änderung der Anzahl der für die Ressource verfügbaren Knoten aus dem Zeitintervall und dem Zeitintervall, das dem Zeitintervall unmittelbar vorausgeht, einschließt und die Bestimmung der Anzahl der jeder Ressource für jedes Zeitintervall zuzuweisenden Knoten ferner auf der Anzahl der für die Ressource für jedes Zeitintervall verfügbaren Knoten basiert.

8. Die Rechenvorrichtung nach einem der Ansprüche 1 bis 7, wobei die Bestimmung der Anzahl von Knoten, die jeder Ressource für jedes Zeitintervall zuzuordnen sind, ferner auf der Bestimmung einer Flussrate von Aufgaben basiert, die auf der Grundlage einer Ankunftszeit verarbeitet werden, und der Zeitplan für die Ressourcenzuweisung auf der Flussrate von Aufgaben basiert, die für jedes Zeitintervall verarbeitet werden.

9. Ein computer-implementiertes Verfahren, das Folgendes umfasst:
Empfangen einer Ressourcenzuweisungsanforderung von einem Ressourcenzuweisungsanforderungsserver über eine Datenkommunikationsschnittstelle, wobei die Anforderung Aufgabeninformationen auf der Grundlage eines Aufgabenplans, einen Zeitraum mit einer Vielzahl von Zeitintervallen, eine Anzahl von während jedes Zeitintervalls verfügbaren Ressourcen, eine Anzahl von während jedes Zeitintervalls verfügbaren Knoten und Nachbarschaftsbeschränkungen für jeden benachbarten Knoten der Anzahl von Knoten enthält;

als Reaktion auf die Anforderung der Ressourcenzuweisung für jedes Zeitintervall des Zeitraums:

Bestimmen auf der Grundlage der Aufgabeninformationen einer ersten Anzahl von Aufgaben, die innerhalb des Zeitintervalls in einer Aufgabenwarteschlange zu bearbeiten sind;
Bestimmen einer zweiten Anzahl von Aufgaben aus der Aufgabenwarteschlange, die nach einem Zeitintervall, das dem Zeitintervall unmittelbar vorausgeht, unbearbeitet sind;
Bestimmen basierend auf den Nachbarschaftsbeschränkungen für jeden benachbarten Knoten für die Anzahl der Knoten einer Ressourcenzuweisungsbeschränkung für jede Ressource; und
Bestimmen einer Teilmenge der Anzahl von Knoten, die jeder Ressource in dem Zeitintervall zugewiesen werden sollen, basierend auf: (i) der ersten Anzahl von Aufgaben, (ii) der zweiten Anzahl von Aufgaben und (iii) der Ressourcenzuweisungsbeschränkung für jede Ressource; und

Bereitstellen, dem Server für die Ressourcenzuweisung über die Datenkommunikationsschnittstelle, eines Zeitplans für die Ressourcenzuweisung, der die Teilmenge der Anzahl der Knoten enthält, die jeder Ressource für jedes Zeitintervall des Zeitraums zugewiesen sind.

10. Das computerimplementierte Verfahren nach Anspruch 9 umfasst ferner:
Berechnen, mit Hilfe eines Simulationsmodells, eines Maßes für die Dienstqualität für jedes Zeitintervall basierend auf der Anzahl der Knoten, die jeder Ressource für jedes Zeitintervall zugewiesen werden sollen.

11. Das computerimplementierte Verfahren nach Anspruch 10, wobei das Maß für die Dienstqualität mindestens eine der folgenden Größen umfasst: eine Wartezeit für die erste Anzahl von Aufgaben und die zweite Anzahl von zu verarbeitenden Aufgaben und eine Warteschlangengröße für jeden Knoten.

12. Das computerimplementierte Verfahren nach einem der Ansprüche 9 bis 11, wobei die Anforderung der Ressourcenzuweisung ferner eine maximale Anzahl verfügbarer Knoten enthält und die Bestimmung der Anzahl der Knoten, die jeder Ressource für jedes Zeitintervall zugewiesen werden sollen, ferner auf der maximalen Anzahl verfügbarer Knoten basiert.

13. Das computerimplementierte Verfahren nach einem der Ansprüche 9 bis 12, wobei die Anforderung der Ressourcenzuweisung ferner eine soziale Entfernungsbeschränkung enthält und die Bestimmung der Anzahl der Knoten, die jeder Ressource für jedes Zeitintervall zugewiesen werden sollen, ferner auf der sozialen Entfernungsbeschränkung basiert.

14. Das computerimplementierte Verfahren nach einem der Ansprüche 9 bis 13, wobei die Anforderung der Ressourcenzuweisung ferner eine Dienstqualitätsbeschränkung enthält und die Bestimmung der Anzahl der Knoten, die jeder Ressource für jedes Zeitintervall zugewiesen werden sollen, ferner auf der Dienstqualitätsbeschränkung basiert.

15. Das computerimplementierte Verfahren nach einem der Ansprüche 9 bis 14, wobei die Ressourcenzuweisungsbeschränkung eine Änderung der Anzahl der für die Ressource verfügbaren Knoten aus dem Zeitintervall und dem Zeitintervall, das dem Zeitintervall unmittelbar vorausgeht, einschließt und die Bestimmung der Anzahl der jeder Ressource für jedes Zeitintervall zuzuweisenden Knoten ferner auf der Anzahl der für die Ressource für jedes Zeitintervall verfügbaren Knoten basiert.

16. Das computerimplementierte Verfahren nach einem der Ansprüche 9 bis 15, wobei die Bestimmung der Anzahl von Knoten, die jeder Ressource für jedes Zeitintervall zuzuordnen sind, ferner auf der Bestimmung einer Flussrate von Aufgaben basiert, die auf der Grundlage einer Ankunftszeit verarbeitet werden, und der Zeitplan für die Ressourcenzuweisung auf der Flussrate von Aufgaben basiert, die für jedes Zeitintervall verarbeitet werden

17. Nichttransitorisches Computerspeichermedium, das mit einem Computerprogramm kodiert ist, wobei das Computerprogramm eine Vielzahl von Programmanweisungen umfasst, die, wenn sie von einem oder mehreren Prozessoren ausgeführt werden, den einen oder die mehreren Prozessoren veranlassen, das Verfahren nach einem der Ansprüche 9 bis 16 durchzuführen.

**Revendications**

1. Appareil de calcul comprenant :

   un ou plusieurs processeurs ; et
   au moins un dispositif de mémoire couplé aux un ou plusieurs processeurs ; et
   une interface de communication de données opérationnellement associée aux un ou plusieurs processeurs,
   dans lequel l'au moins un dispositif de mémoire contient une pluralité d'instructions de programme qui,
   lorsqu'elles sont exécutées par les un ou plusieurs processeurs, amènent l'appareil de calcul à :

      recevoir, à partir d'un serveur de demande d'allocation de ressources via l'interface de communication de données, une requête d'allocation de ressources qui inclut des informations de tâche sur la base d'un calendrier de tâches, une période de temps incluant une pluralité d'intervalles de temps, un nombre de ressources disponibles pendant chaque intervalle de temps, un nombre de nœuds disponibles pendant chaque intervalle de temps, et des contraintes d'adjacence pour chaque nœud adjacent du nombre de nœuds ;
      en réponse à la requête d'allocation de ressources, pour chaque intervalle de temps de la période de temps :

         déterminer un premier nombre de tâches à traiter dans une file d'attente de tâches dans l'intervalle de temps sur la base des informations de tâche ;
         déterminer un deuxième nombre de tâches à partir de la file d'attente de tâches qui ne sont pas traitées après un intervalle de temps qui précède immédiatement l'intervalle de temps ;
         déterminer, sur la base des contraintes d'adjacence pour chaque nœud adjacent pour le nombre de nœuds, une contrainte d'allocation de ressources pour chaque ressource ; et
         déterminer un sous-ensemble du nombre de nœuds à affecter à chaque ressource dans l'intervalle de temps sur la base : (i) du premier nombre de tâches, (ii) du deuxième nombre de tâches, et (iii) de la contrainte d'allocation de ressources pour chaque ressource ; et
         fournir, au serveur de demande d'allocation de ressources via l'interface de communication de données, un calendrier d'allocation de ressources qui inclut le sous-ensemble du nombre de nœuds affectés à chaque ressource pour chaque intervalle de temps de la période de temps.

2. Appareil de calcul selon la revendication 1, dans lequel la pluralité d'instructions de programme sont compilées pour amener l'appareil de calcul à :
   calculer, via un modèle de simulation, une mesure de qualité de service pour chaque intervalle de temps sur la base du nombre de nœuds à affecter à chaque ressource pour chaque intervalle de temps.

3. Appareil de calcul selon la revendication 2, dans lequel la mesure de qualité de service comprend au moins un parmi un temps d'attente pour le premier nombre de tâches et le deuxième nombre de tâches à traiter et une taille de file d'attente pour chaque nœud.

4. Appareil de calcul selon l'une quelconque des revendications 1 à 3, dans lequel la requête d'allocation de ressources inclut en outre un nombre maximal de nœuds disponibles, et la détermination du nombre de nœuds à affecter à chaque ressource pour chaque intervalle de temps est en outre basée sur le nombre maximal de nœuds disponibles.

5. Appareil de calcul selon l'une quelconque des revendications 1 à 4, dans lequel la requête d'allocation de ressources inclut en outre une contrainte de distance sociale, et la détermination du nombre de nœuds à affecter à chaque ressource pour chaque intervalle de temps est en outre basée sur la contrainte de distance sociale.

6. Appareil de calcul selon l'une quelconque des revendications 1 à 5, dans lequel la requête d'allocation de ressources inclut en outre une contrainte de qualité de service, et la détermination du nombre de nœuds à affecter à chaque ressource pour chaque intervalle de temps est en outre basée sur la contrainte de qualité de service.

7. Appareil de calcul selon l'une quelconque des revendications 1 à 6, dans lequel la contrainte d'allocation de ressources inclut un changement du nombre de nœuds disponibles pour la ressource à partir de l'intervalle de temps et de l'intervalle de temps qui précède immédiatement l'intervalle de temps, et la détermination du nombre de nœuds à affecter à chaque ressource pour chaque intervalle de temps est en outre basée sur le nombre de nœuds disponibles pour la ressource pour chaque intervalle de temps.

8. Appareil de calcul selon l'une quelconque des revendications 1 à 7, dans lequel la détermination du nombre de nœuds à affecter à chaque ressource pour chaque intervalle de temps est en outre basée sur la détermination d'un débit de tâches en cours de traitement sur la base d'un temps d'arrivée, et le calendrier d'allocation de ressources est basé sur le débit de tâches en cours de traitement pour chaque intervalle de temps.

9. Méthode implémentée par ordinateur, comprenant :

   la réception, à partir d'un serveur de demande d'allocation de ressources via une interface de communication de données, d'une requête d'allocation de ressources qui inclut des informations de tâche sur la base d'un calendrier de tâches, une période de temps incluant une pluralité d'intervalles de temps, un nombre de ressources disponibles pendant chaque intervalle de temps, un nombre de nœuds disponibles pendant chaque intervalle de temps et des contraintes d'adjacence pour chaque nœud adjacent du nombre de nœuds ;
   en réponse à la requête d'allocation de ressources, pour chaque intervalle de temps de la période de temps :

   la détermination d'un premier nombre de tâches à traiter dans une file d'attente de tâches dans l'intervalle de temps sur la base des informations de tâche ;
   la détermination d'un deuxième nombre de tâches à partir de la file d'attente de tâches qui ne sont pas traitées après un intervalle de temps qui précède immédiatement l'intervalle de temps ;
   la détermination, sur la base des contraintes d'adjacence pour chaque nœud adjacent pour le nombre de nœuds, d'une contrainte d'allocation de ressources pour chaque ressource ; et
   la détermination d'un sous-ensemble du nombre de nœuds à affecter à chaque ressource dans l'intervalle de temps sur la base de : (i) du premier nombre de tâches, (ii) du deuxième nombre de tâches, et (iii) de la contrainte d'allocation des ressources pour chaque ressource ; et
   la fourniture, au serveur de demande d'allocation de ressources via l'interface de communication de données, d'un calendrier d'allocation de ressources qui inclut le sous-ensemble du nombre de nœuds affectés à chaque ressource pour chaque intervalle de temps de la période de temps.

10. Méthode implémentée par ordinateur selon la revendication 9, comprenant en outre :
    le calcul, via un modèle de simulation, d'une mesure de qualité de service pour chaque intervalle de temps sur la base du nombre de nœuds à affecter à chaque ressource pour chaque intervalle de temps.

11. Méthode implémentée par ordinateur selon la revendication 10, dans laquelle la mesure de qualité de service comprend au moins un parmi un temps d'attente pour le premier nombre de tâches et le deuxième nombre de tâches à traiter et une taille de file d'attente pour chaque nœud.

12. Méthode implémentée par ordinateur selon l'une quelconque des revendications 9 à 11, dans laquelle la requête d'allocation de ressources inclut en outre un nombre maximal de nœuds disponibles, et la détermination du nombre de nœuds à affecter à chaque ressource pour chaque intervalle de temps est en outre basée sur le nombre maximal de nœuds disponibles.

13. Méthode implémentée par ordinateur selon l'une quelconque des revendications 9 à 12, dans laquelle la requête d'allocation de ressources inclut en outre une contrainte de distance sociale, et la détermination du nombre de nœuds à affecter à chaque ressource pour chaque intervalle de temps est en outre basée sur la contrainte de distance sociale.

14. Méthode implémentée par ordinateur selon l'une quelconque des revendications 9 à 13, dans laquelle la requête d'allocation de ressources inclut en outre une contrainte de qualité de service, et la détermination du nombre de nœuds à affecter à chaque ressource pour chaque intervalle de temps est en outre basée sur la contrainte de qualité de service.

15. Méthode implémentée par ordinateur selon l'une quelconque des revendications 9 à 14, dans laquelle la contrainte d'allocation de ressources inclut un changement du nombre de nœuds disponibles pour la ressource à partir de l'intervalle de temps et de l'intervalle de temps qui précède immédiatement l'intervalle de temps, et la détermination du nombre de nœuds à affecter à chaque ressource pour chaque intervalle de temps est en outre basée sur le nombre de nœuds disponibles pour la ressource pour chaque intervalle de temps.

16. Méthode implémentée par ordinateur selon l'une quelconque des revendications 9 à 15, dans laquelle la détermination du nombre de nœuds à affecter à chaque ressource pour chaque intervalle de temps est en outre basée sur une détermination d'un débit de tâches en cours de traitement sur la base d'un temps d'arrivée, et le calendrier d'allocation de ressources est basé sur le débit de tâches en cours de traitement pour chaque intervalle de temps.

17. Support de stockage informatique non transitoire codé avec un programme d'ordinateur, le programme d'ordinateur comprenant une pluralité d'instructions de programme qui, lorsqu'elles sont exécutées par un ou plusieurs processeurs, amènent les un ou plusieurs processeurs à réaliser la méthode selon l'une quelconque des revendications 9 à 16.

**FIG. 1**

EP 4 064 156 B1

200

Resource
Allocation
Request
**210**

→

Optimization
Instruction Set
**150**

→

Resource
Allocation
Schedule
**220**

Task Information
{Tasks, Task Schedule}
Time Period (T)
Time Intervals ($t$)
Resource Availability
Node Availability
Adjacency Constraints
Other Constraints

212

222

Node Assignments
Resource Assignments

## FIG. 2

300

Resource
Allocation
Schedule
**220**

→

Simulation
Instruction Set
**160**

→

Simulation
Information
**310**

Node Assignments
Resource Assignments

222

312

Quality of Service Data
Node Utilization Rate

## FIG. 3

400

Receive a resource allocation request ⌁ 410

In response to the resource allocation request, for each time interval of the time period: ⌁ 420

Determine a first number of tasks to be processed in a task queue within the time interval based on the task information ⌁ 422

Determine a second number of tasks from the task queue that are unprocessed after a time interval that immediately precedes the time interval ⌁ 424

Determine a resource allocation constraint for each resource based on the adjacency constraints for each adjacent node for the plurality of nodes ⌁ 426

Determine a subset of the number of nodes to be assigned to each resource in the time interval based on: (i) the first number of tasks, (ii) the second number of tasks, and (iii) the resource allocation constraint for each resource ⌁ 428

Provide a resource allocation schedule which includes the determined subset of the number of nodes assigned to each resource for each time interval of the time period ⌁ 430

# FIG. 4

510

Queue: interval *t* — 502

| | | T5 | T4 | T3 | T2 | T1 |

NODE -1
514

NODE -2
516

520

Queue: interval *t+1* — 504

| T10 | T9 | T8 | T7 | T6 | T5 | T4 |

NODE -1
514

NODE -2
516

NODE -3
518

**FIG. 5**

FIG. 6

EP 4 064 156 B1

700

NETWORK(S)
**712**

702

NETWORK
INTERFACE
CONTROLLER(S)
**710**

INPUT/
OUTPUT
CONTROLLER
**730**

CHIPSET   **706**

CPU(S)
**704**

MEMORY
**708**

STORAGE
CONTROLLER
**714**

718

OPERATING
SYSTEM
**720**

RESOURCE
ALLOCATION
MODULE
**722**

OPTIMIZATION
MODULE
**724**

SIMULATION
MODULE
**726**

# FIG. 7

**EP 4 064 156 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020411168 A1